# EUROPEAN PATENT APPLICATION

(11) **EP 1 637 695 A1**
(43) Date of publication of application: **22.03.2006**
(21) Application number: 05270072.1
(22) Date of filing: 17.09.2001
(51) Int. Cl.: E21B 47/12

(54) **Methods and apparatus for remote monitoring and control.**

(30) Priority: 22.09.2000 US 668785
(62) Divisional of application: 01967491.0
(71) Applicant: WEATHERFORD/LAMB, INC., Houston Texas 77027 (US); Longbottom, James, Magnolia, Tx 77353 (US)
(72) Inventor: Haugen, David, Michael, 77573, League City (US); Longbottom, James, 77353, Magnolia (US)
(74) Representative: Talbot-Ponsonby, Daniel Frederick

(57) **Abstract**

In one aspect, a method of communicating between an on-site location and an off-site location is provided. The method comprising providing a communications attachment that can be positioned at the on-site location. A 2 or more-way communication system is established between the on-site location and the off-site location. The actions of the on-site location are remotely monitored by input from the off-site location. In another aspect, an apparatus comprises an off-site service computer, a communications attachment, and a communications system. The communications attachment is positioned an on-site location. A communication system between the communications attachment and the off-site service computer. In one aspect, the communications attachment is secured to a hardhat. One aspect of the communications attachment provides for communication between a person located on-site and an off-site service person for failure analysis of a complex system.

## Description

The invention relates to communication systems. More particularly, the invention relates to an interactive communication system for off-site service and support personnel.

Complex industrial equipment can be found at wellsites and platforms; nuclear and fossil fuel power generating plants; oil refineries; petroleum and chemical processing plants, and manufacturing facilities. All of the equipment requires periodic inspection, maintenance, and troubleshooting by service personnel. In the oil and gas industry for example, service and support personnel include engineers, technicians, specialists, and consultants that are called upon to interact with on-site personnel. Because the profits that such a complex systems can generate may run into the millions of dollars per day, the pressures to keep the systems operating continuously and efficiently is often immense. The nature of the problems requiring service and support however, create difficulties in providing services in a time and cost effective manner. Most service and support personnel are based at a home base or office, and each person often services multiple sites. The actual time that these service personnel spend performing their specialised task at a particular location is frequently a very small portion of the total time associated with the job. This is due to the transportation time to and between the various sites to be serviced, which are frequently located in distant parts of the world. Another reason for the relatively small amount of actual work-time is that, due to the specialised nature of the equipment and training of the service personnel, each service person frequently services a small piece of the overall complex system. Once on-site, the service person's schedule is often affected by unscheduled delays in other parts of that overall system. For example, it is not uncommon for service personnel to be on-site at a remotely located oil platform for several days before beginning a task that requires only a day once they gain exposure to the system. Also, due to distances and logistical issues associated with transportation to these remote locations, the service personnel often cannot return to their home bases temporarily or do other productive work at the location.

Off-site, specialised service personnel are needed immediately when there are malfunctions or failures in equipment, particularly when the malfunction or failure has slowed or shut down a major or important part of an overall operation. Currently, service personnel are not always readily available when such emergencies arise due to the geographic distance between service personnel and the operation or because of other professional or personal conflicts. Further, service personnel often require written procedures in order to effectively carry out their function in relation to a certain piece of complex machinery. For example, service personnel often have to be onsite to evaluate which procedure is to be performed and then must arrange access to the procedures which are usually dispatched for the home office. The procedures are typically needed and utilised in some written format and it can be difficult at times to access a certain procedure at certain times, such as at night or during weekends. Another problem associated with conventional methods of servicing remote equipment relates to records that must be prepared describing an operation performed on machinery. Preparation of the records is essential as a historical document and also is utilised to prepare an invoice of services. Currently, the record is created either during or after the work is performed and is a separate, time consuming task.

There is a need therefore, for a portable, interactive communication system for use between the location of complex equipment and the home office of service personnel, whereby service personnel can monitor, diagnose and provide advice and solutions to problems arising with and around the equipment. There is a further need for a portable, interactive communication system for use between the location of complex equipment and the home office of service personnel, whereby service personnel located at the complex equipment can interact directly with their own office, transmitting and receiving information therefrom. There is a further need for a portable, interactive communication system for use between the location of complex equipment and the home office of service personnel, whereby locally situated service personnel can interact directly with more experienced or more specially trained personnel at their home office, transmitting and receiving information therefrom. Using the communication system and through a less-trained on-site person, experienced personnel can make informed evaluations about the on-site situation, and prescribe an appropriate remedy for a problem.

There is a further need for a portable, interactive communication system for use in servicing complex equipment whereby personnel at the location of the equipment can send and receive detailed information relating to the equipment to and from a variety of remote locations where persons having additional or more specialised training are stationed. In this manner, the situation on-site could be analysed more effectively with input from a variety of skilled service personnel.

There is a further need for an interactive communication system to be used for the service and support of complex industrial equipment that is remotely located from qualified service personnel. There is an additional need for an interactive communication system to permit equipment to be serviced and supported by highly trained personnel without the need for the personnel to travel to the physical location of the equipment. There is yet a further need for an interactive communication system that is light-weight and portable and can be utilised by service personnel either at a home office or a remote location of equipment to be serviced and supported. There is a further need for an interactive communication system capable of providing information in a variety of digital and analogue forms including voice, video and data. There is yet a further need for an interactive communication system permitting various skilled personnel at a variety of different locations to interact together and independently to provide support and service to remotely located equipment. There is yet a further need for an interactive communication system permitting the monitoring of conditions at remotely located equipment. There is yet a further need for an interactive communications system that is easy for a remotely located person to use and which transmits data without undue involvement by the person at the on-site equipment.

The present invention provides methods and apparatus as set out in the claims.

In one aspect of the invention, a method of communicating between an on-site location and an off-site location is provided. The method comprises providing a communications attachment that can be positioned at the on-site location. A two or more-way communication system is established between the on-site location and the off-site location. The actions of the on-site location can be remotely monitored by input from the off-site location and the actions of the on-site location are relayed back to the off-site location to ensure directions have been carried out as directed. In another aspect of the invention, an apparatus comprises an off-site service computer, a communications attachment, and a communications system. The communications attachment is typically located at an on-site location. A communication system is supplied between the communications attachment and the off-site service computer. In one embodiment, the communications attachment is secured to an article worn by on-site personnel, like a hardhat. The communications attachment facilitates communication between personnel by supplying visual data.

Some preferred embodiments of the invention will now be described by way of example only and with reference to the accompanying drawings, in which:
Figure 1 shows a block diagram of one embodiment of communication system of the invention;
Figure 2 shows a detailed block diagram of one embodiment of the on-site module, the remote module, and the downhole sensor/control module of the communication system shown in Figure 1;
Figure 3 shows a side elevational view of a hard hat attached to one embodiment of communications attachment of the communication system;
Figure 4 shows a front view of one embodiment of display integrated in the hard hat shown in Figure 3;
Figure 5, consisting of Figs. 5A and 5B, shows a flow chart of one embodiment of a method performed by the communication system shown in Figure 1;
Figure 6 shows a schematic diagram of a plurality of well platforms in which the communication system may be used; and
Figure 7 shows a detailed block diagram of one embodiment of communication network including the remote module, the off-site module, and the connections therebetween.

To facilitate understanding, identical reference numerals have been used, where possible, to designate identical elements that are common to the figures.

After considering the following description, those skilled in the art will clearly realise that the teachings of this invention can be readily utilised in interactive communication systems between service persons and people located at remote on-site locations. This disclosure focuses on the use of the communication system in the oil and gas industry in particular. It is envisaged however, that the communication system may also be used in nuclear and fossil fuel power generating plants, oil refineries, petroleum and chemical processing plants, metal producing plants, and plants with heavy machinery. The on-site module portion of the communication system is preferably located at an oil well or drilling platform or rig. The off-site module portion of the communication system is preferably located at the location of a service person or, if the service person is on-site, at a home office supporting the service person.

### Communications System Overview

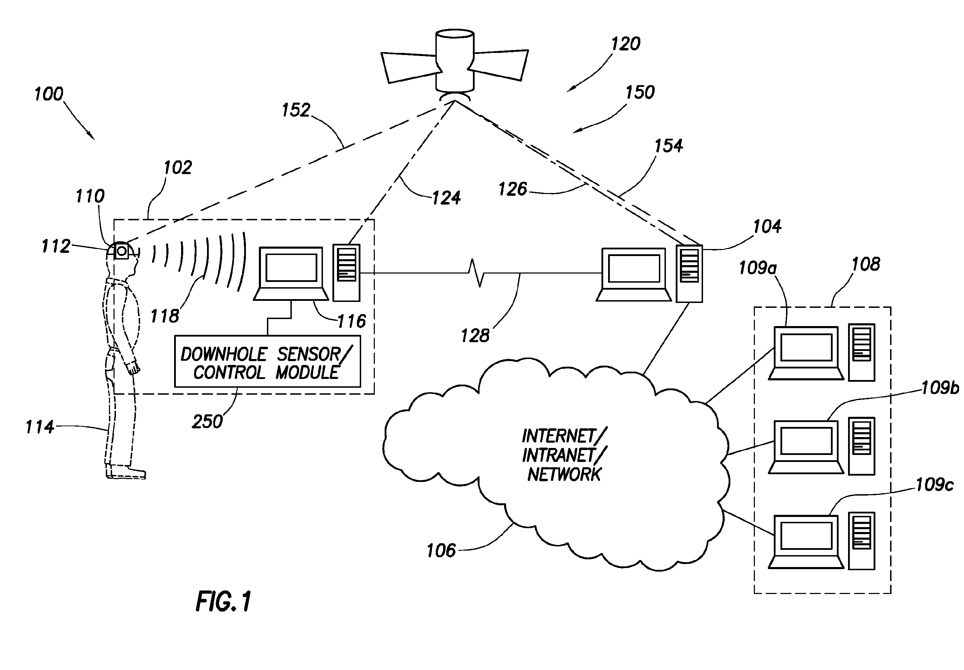

One embodiment of communication system 100 is shown in Figure 1. The communication system 100 comprises an on-site module 102, a communications link 120, a remote module 104, a communication network 106 (that may be the Internet, an intranet, or any other known appropriate network), and an off-site module 108. The on-site module 102 comprises a communications attachment 110 (that is secured to an on-site person 114, for example to a hardhat 112) and an on-site computer 116. The on-site computer 106 may be a personal computer, a laptop, a mainframe, a networked computer, or any known type of computer, but is preferably a laptop due to the remote locations and difficult environment that the on-site computer 106 is likely to encounter. The on-site computer 116 may be associated with the operation of the wellsite as described below. Alternatively, the on-site computer 116 may be associated primarily with the communication link 120. A local link 118 preferably transmits information by RF signals between the communications attachment 110 and the on-site computer 116.

The communications link 120 is established between the on-site computer 116 and the remote module 104. In one embodiment, the communication link 120 includes a first link 124, a communication satellite 122, and a second link 126. The first link 124 and the second link 126 are preferably wireless communication links. Information such as audio, video, still pictures, text, and other data may be transmitted using such protocols as code division multiple access (CDMA), time division multiple access (TDMA), and frequency division multiple access (FDMA) as is known in the art. The communications satellite 122 may be a geostationary satellite or a low earth orbit satellite (LEOS). In an alternate embodiment, the communications link 120 comprises a land-link 128 that is configured to transmit wire communications in a full-duplex manner between the on-site computer 116 and the remote module 104.

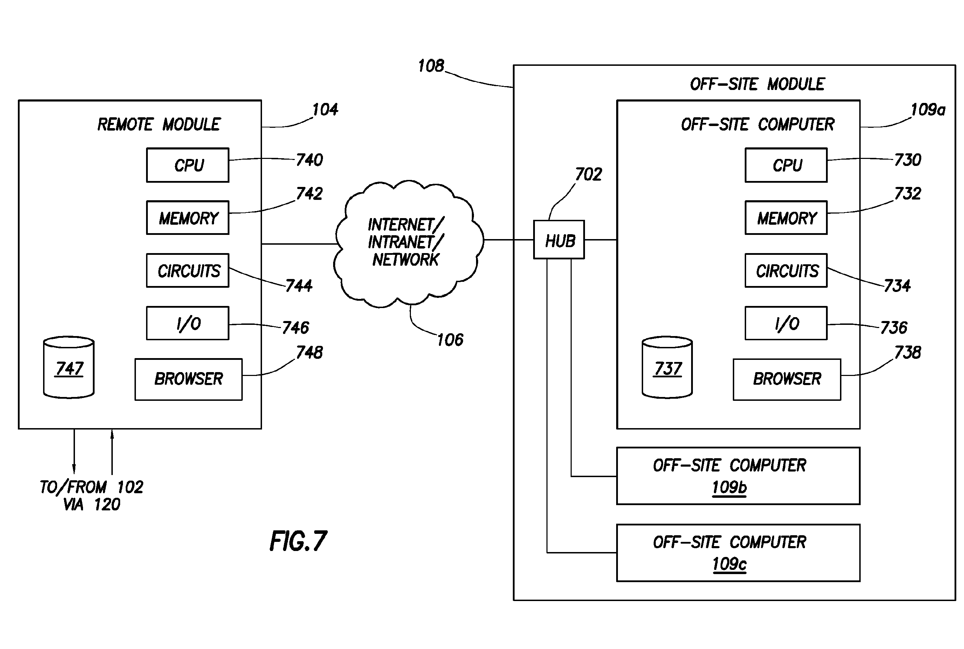

The off-site module 108 comprises a plurality of off-site service computers 109a, 109b, and 109c. Though three off-site computers are shown, any number may be used, and each off-site computer can be located at a different geographic location. Each off-site service computer 109a, 109b, and 109c is in communication with the communication network 106 via a direct connection. Alternatively, each of the off-site service computers 109a, 109b, and 109c may be attached to the communication network 106 by a hub or switch 702 (see Figure 7). Off-site service persons (not shown) may access the communication system 100 via any one of the off-site service computers 109a, 109b, and 109c. The on-site module 102, the communications link 120, the communication network 106, and the off-site module provide a broadband two-way pathway between the communications attachment 110 and the off-site service computers 109a, 109b, and 109c.

The embodiment of communication system 100 as physically described above is able to transmit video, audio, still image, and/or data information between the communications attachment 110, the off-site service computers 109a, 109b, and 109c, and the remote computer 104. Certain embodiments of the communication systems also provide a position deriving system 150 comprising a first Global Positioning System (GPS) link 152, a communication satellite 122, a second GPS link 154, and a remote module 104. The remote module 104 is capable of deriving positional information about the location of the on-site person 114 using the positional deriving system 150. Such positional information can be transmitted from the remote module 104 to the off-site service computers 109a, 109b, and 109c over the communication network 106, if necessary. The first GPS link 152 is depicted as extending from the communications attachment 110 to the communications satellite 122. In an alternate embodiment, the first GPS link 152 can extend from the on-site computer 116 to the communication satellite 122. If the on-site person is located in close enough proximity to the on-site computer 116 to be able to communicate thereto, it is assumed that the on-site person is working on that worksite or platform associated with that on-site computer. Therefore, the positional information that is derived from either the on-site person 114 or the on-site computer 116 can be used to provide positional, billing, work code, and other similar information relative to the on-site person as described below.

The position deriving system 150 indicated in the embodiment shown in Figure 1 may utilise the same communication satellite 122 to transmit the positional information as communications link 120 uses to transmit the video, still images, audio, text, data, etc. Alternatively, another communication satellite 122' can be used to transmit the positional information, or any other known device that transmits positional information may also be used in the same manner as described relative to the communication satellite 122. The second GPS link 154 is shown as extending from the communications satellite 122 to the remote module 104. Positional information is transmitted between the remote module 104 to the off-site module 108 via the communication network 106. Alternately, the second GPS link 154 may extend directly from the communication satellite 122 to the off-site module 108 where one or more of the off-site service computers 109a, 109b, or 109c can receive the positional information transmitted from the communications attachment 110 via the first GPS link 152.

As indicated above, a variety of types of information can be transmitted between the communications attachment 110, the remote module 104, and the off-site module 108 using the communication link 120 and/or the communications network 106. Many of the information types are broadband in nature. Such broadband network protocols as Asynchronous Transfer Mode (ATM) or Frame Relay may be used to provide this information transfer.

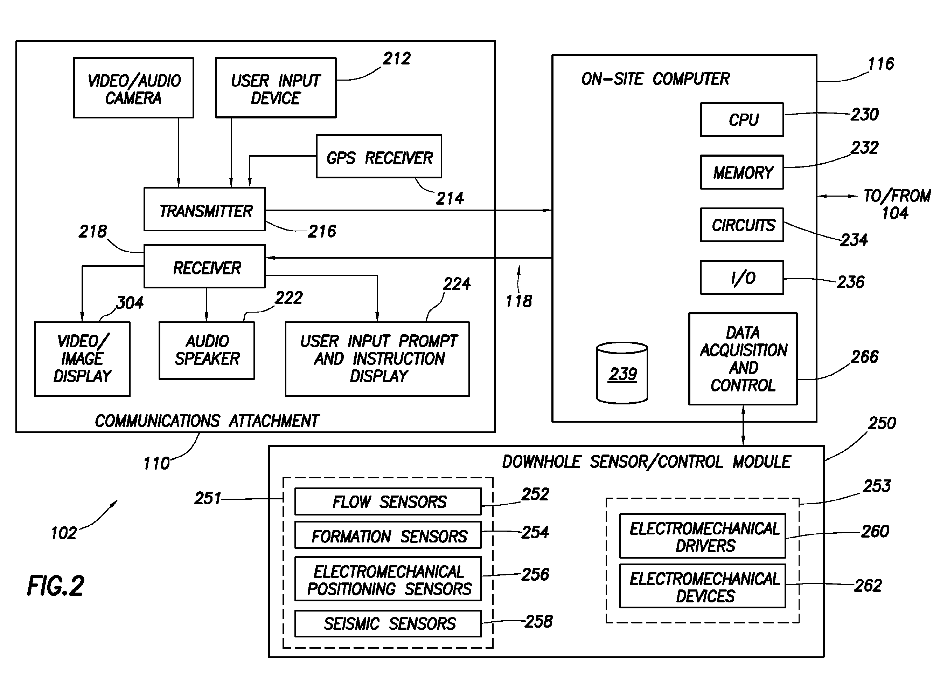

Figure 2 shows an expanded block diagram of one embodiment of the on-site module 102 shown in Figure 1 comprising the communications attachment 110, the on-site computer 116, and the downhole sensor/control module 250. The communications attachment 110 may comprise a video/still image/audio camera 210, a user input device 212, a GPS receiver 214, a transmitter 216, a receiver 218, a video/still image display 304, an audio speaker 222, and a user input prompt and instruction display 224. It is envisioned that other components may be contained in the communications attachment 110. The transmitter 216 receives information from the video/still image/audio camera 210, the user input device 212, and/or the GPS receiver 214. The transmitter transfers information from the communications attachment 110 to the on-site computer 116 over the data link 118. The receiver 218 receives signals that contain information from the on-site computer 116 over the data link 118. The receiver 218 outputs the data received from the on-site computer to the video/still image display 304, the audio speaker 222, and/or the user input prompt and instruction display 224.

The type of information transmitted from the video/still image/audio camera 210, from the user input device 212, and from the GPS receiver 214 is different, and typically is formatted differently. The transmitter 216 may combine all of these distinct information types into a form that can be transmitted into a common signal using such protocols as ATM, frame relay, CDMA, FDMA, or TDMA. In one embodiment, the video/still image/audio camera 210 is a camcorder or similar device that is specially designed for external and other tough applications. The video/still image/audio camera 210 (as well as the remainder of the communications attachment 110) is intended to able to withstand the types of physical shocks, abrasions, exposure to dust, salt, or dirt, and varied temperatures to which the communications attachment is likely to be exposed.

The data input 215 may be used to receive information or data such as video streams from external sources, such as contained in the downhole sensor/control module 250. For example, data generated by the flow sensors 252 may be input directly into the data input 215 either by an electric cable connected directly from the sensor, by a wireless link connected to the sensor, or via a data acquisition and control (DAC) unit 266 of the on-site computer 116 and the local link 118. This data is then transmitted from the communications attachment 110 to the remote computer(s) 109a to 109c over the communication system 100, and the data can be displayed in a useful format or stored for access when desired. As such, the operational parameters of the downhole sensor/control module 250 can be monitored, analysed, and/or stored.

In this disclosure, the term "monitor" is intended to apply to a person, e.g. a service person, visually monitoring a display screen or output indicator displaying the data transmitted from the communications attachment 110, or from some other sensor or source of information located on-site.

A particular communication between an on-site person and an off-site service person may be commenced by either person. If the on-site person commences the communication, there has to be some type of user input device that permits the on-site person to select which area of service expertise, or which service person, is sought. If the off-site service person commences the communication, software must be included in the off-site service computer 109a, 109b, or 109c that permits remote accessing of the communications attachment 110.

The user input device 212 has multiple input devices that may include one or more of the following: a keypad, a multiple press-buttons, a bar-code reader, or a parameter measuring device. The user input device 212 provides physical communication from the on-site person 114 to one or more of the off-site service computers 109a, 109b, or 109c. The on-site person 114 may have to key in a prescribed code before they can utilise the communications attachment 110. The user can input the identity their identity using the off-site service computer 109a, 109b, or 109c by entering a password in the keypad input. Another user input device is a bar code scanner that enables tools, parts, or equipment to be uniquely numbered and recorded prior to their use. The bar code scanner preferably interacts with a database that is capable of retrieving a checklist stored in the off-site module 108 or the remote module 104. The database contains the desired information relating to that particular tool or part. The off-site module 108 or the remote module 104 can, in response, return a simple schematic of a part or tool along with a prompt for critical dimensions/features to be checked for that particular tool.

The GPS receiver 214 provides information about the position of the communications attachment 110 upon the earth, and is based upon interaction between the GPS receiver 214 and communication satellites 122. Since the communications attachment is presumably close to the on-site person 114 (for example, attached to hardhat worn by the on-site person), the positional information also indicates the location or worksite of the on-site person. Any other known device that provides geopositional information such as Loran may be used in place of the GPS receiver 214. As the on-site person 114 traverses the work-site with the communications attachment 110 secured to his hardhat (or some other connection), the GPS receiver transmits the location of the on-site persons 114. The remote module 104 or the off-site module 108 contains database 747 and 737 (shown in the embodiment of Figure 7 and described below), that stores the geographic locations and other data associated with each particular worksite. For instance, as soon as the off-site person leaves the vicinity of the worksite, his billing associated with that particular worksite ceases. In this disclosure, the term billing can also include those billings associated with the off-site service personnel who utilise the off-site service computers 109a, 109b, and 109c as well as the on-site person 114. Additionally, this positional information could be used to locate a lost, missing, or hurt on-site person.

The analogue or digital information from the video/still image/audio camera 210, the input information from the user input device 212, and the positional information from the GPS receiver information 214 are all combined and transmitted over the local link 118. The on-site computer can store the particular information that it desires on, for example, memory 232 that may comprise ROM, RAM, a disk drive, a magnetic memory, or an alternate form of memory. This information can provide a record of a particular activity. The on-site computer 116 then transmits the desired information over the communications link 120 to the remote module 104. The remote module can store whatever information is desired based upon the input from the user, and the program performed by the remote module 104. The remote computer can then transmit the information to the off-site service module 108 via the communications network 106 that is envisioned to be the Internet.

In response, considerable information is transmitted from the off-site module 108, the remote module 104, or the on-site computer 116 to the communications attachment 110. The communications attachment 110 shown in Figure 2 can receive information from the above sources that relates to video display information, audio information, user input prompt information, measurement or calibration information, instructional information, or alternate information. All of these types of information are received by the receiver 218 of the communications attachment 110. The receiver 218 receives information, and based upon the header information associated with the particular information, determines the type of information that it is receiving. Based upon the type of information, the receiver forwards the information to either the video/still image display 304, the audio speaker 222, or the user input prompt and instruction display 224.

There are typically at least three computers that interact within the communication system 100. These computers are located at the on-site computer 116, the remote module 104 (that is preferably configured as a server), and one of the off-site service computers 109a, 109b, or 109c at the off-site module 102. The components of each of these computers is now described in order.

The on-site computer 116 comprises a CPU 230, a memory 232, circuits 234, input/output (I/O) circuits 236, a database 239, and the DAC unit 266. The on-site computer 116 may be a general-purpose computer, a microprocessor, a microcontroller, or any other known type of computer. The CPU 230 performs the processing and arithmetic operations for the on-site computer 116. CPU 230 is preferably of a type produced by Intel, Texas Instruments, Advanced Micro Devices, Motorola, or other such companies and whose operation is generally known to those skilled in the art.

The memory 232 includes random access memory (RAM) and read only memory (ROM) that together store the computer programs, operands, operators, and other parameters that relate to the communication of the communication system 100. A bus (not shown) provides for digital information transmissions between CPU 230, circuit portion 234, memory 232, I/O 236, database 239, DAC unit 266, and other portions of the communication system 100. The database 239 may utilise RAM, memory from disk drives (not shown), memory from magnetic tape drives, or any other type(s) of memory that is capable of maintaining a database.

I/O 236 provides an interface to control the transmissions of digital information between the on-site computer 116 and other portions of the communication system 100. I/O 236 also provides an interface between the components of the on-site computer 116. Circuit portion 234 comprises all of the other user interface devices (such as display and keyboard), system devices, and other accessories associated with the on-site computer 116. While one embodiment of digital on-site computer 116 is described herein, other digital computers as well as analogue computers could function well in this application, and are within the intended scope of the invention.

The remote module 104, shown in the embodiment of Figure 7 includes another computer, and comprises a CPU 740, a memory 742, circuits 744, I/O circuits 746, a database 747, and a browser 748. The remote module 104 may be a general-purpose computer, a microprocessor, a micro-controller, or any other known type of computer. The CPU 740 performs the processing and arithmetic operations for the remote module 104. CPU 740 is preferably of a type produced by Intel, Texas Instruments, Advanced Micro Devices, Motorola, or other such companies and whose operation is generally known to those skilled in the art.

The memory 742 includes random access memory (RAM) and read only memory (ROM) that together store the computer programs, operands, operators, and other parameters that relate to the remote module 104 interacting with the communication system 100. A bus (not shown) provides for digital information transmissions between CPU 740, circuit portion 744, memory 742, I/O 746, database 747, browser 748, and other portions of the communication system 100. The database 747 may utilise RAM, memory from disk drives (not shown), memory from magnetic tape drives, or any other type(s) of memory that are configured to maintain a database. The browser 748 is the software stored in the memory 742 that enables the CPU 740 (as well as the remainder of the remote module 104) to communicate over the Internet 106. Examples of browsers are NETSCAPE NAVIGATOR® (a trademark of Netscape Communications Corporation) and INTERNET EXPLORER® (a trademark of Microsoft Corporation).

I/O 746 provides an interface to control the transmissions of digital information between the remote module 104 and other portions of the communication system 100. I/O 746 also provides an interface between the components of the remote module 104. Circuit portion 744 comprises all of the other user interface devices (such as display and keyboard), system devices, and other accessories associated with the remote module 104. While one embodiment of remote module is described herein, other digital computers as well as analogue computers could function well in this application, and are within the intended scope of the invention.

Each of the off-site service computers 109a, 109b, or 109c, shown in the embodiment of Figure 7, comprises a CPU 730, a memory 732, circuits 734, I/O circuits 736, a database 737, and a browser 738. The off-site service computer 109a, 109b, or 109c may be a general-purpose computer, a microprocessor, a microcontroller, or any other known type of computer. The CPU 730 performs the processing and arithmetic operations for the off-site service computer 109a, 109b, or 109c. CPU 730 is preferably of a type produced by Intel, Texas Instruments, Advanced Micro Devices, Motorola, or other such companies and whose operation is generally known to those skilled in the art.

The memory 732 includes random access memory (RAM) and read only memory (ROM) that together store the computer programs, operands, operators, and other parameters that relate to the off-site service computer 109a, 109b, or 109c interacting with the communication system 100. A bus (not shown) provides for digital information transmissions between CPU 730, circuit portion 734, memory 732, I/O 736, database 737, browser 738, and other portions of the communication system 100. The database 737 may utilise RAM, memory from disk drives (not shown), memory from magnetic tape drives, or any other type(s) of memory that are configured to maintain a database. The browser 738 is the software stored in the memory 732 that interacts with the CPU 730 (as well as the remainder of the off-site service computer 109a, 109b, or 109c) to allow the off-site service computer to communicate over the Internet 106. Since both the off-site service computer 109a, 109b, or 109c and the remote module 104 each have a respective browser 738 and 748, the off-site service computer 109a, 109b, or 109c can communicate with the remote module 104 using known techniques.

I/O 736 provides an interface to control the transmissions of digital information between the off-site service computer 109a, 109b, or 109c and other portions of the communication system 100. I/O 736 also provides an interface between the components of the off-site service computers 109a, 109b, or 109c. Circuit portion 734 comprises all of the other user interface devices (such as display and keyboard), system devices, and other accessories associated with the off-site service computer 109a, 109b, or 109c. While one embodiment of off-site service computer is described herein, other digital computers as well as analogue computers could function well in this application, and are within the intended scope of the invention.

The on-site computer 116, the remote module 104, and the off-site computer 109a, 109b, or 109c provide a framework by which an on-site person 114 positioned at the on-site computer can effectively interact with a service person located at the off-site computer. Additionally, information such as video, still images, text, data audio, etc. that is stored in one of the several databases within communication system 100 can also be accessed as necessary to provide prior recorded information about performing the task at hand.

### Oil and Gas Industry Applications

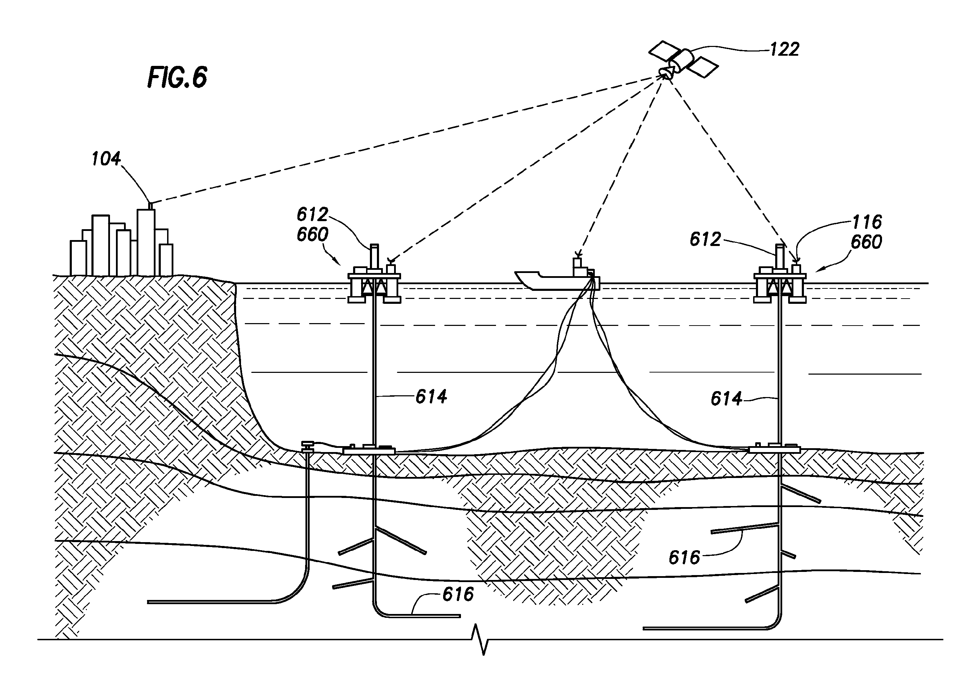

The communication system 100 of Figure 1 can be applied to a variety of applications in which the service person can be located at a variety of off-site locations. The off-site location includes his home office as well as, for example, another oil drilling platform, an oil rig, a nuclear or fossil fuel powered generating plant, or a chemical or petroleum plant. In all cases, the on-site person can interact with a variety of remotely located service persons, computers, and databases. In such applications, the on-site computer 116 is preferably a computer that controls the operation of that particular platform, rig, worksite, etc. For example, Figure 6 is a schematic diagram of one offshore oil drilling system in which the operation of at least one well platform is controlled or monitored by on-site computer 116. Each well platform 660 is typically associated with a plurality of well pipes 614 that extend from the platform through water to the ocean floor and then downwardly into formations under the ocean floor. Although the invention is illustrated in relation to offshore platforms, the inventors contemplate that the invention could also be utilised with land based wells.

Each platform 612 is typically associated with a plurality of wells 614, and a given well 614 is divided into a plurality of separate production zones 616. Each production zone isolates specific areas of a well for purposes of producing selected fluids, preventing blowouts, and avoiding water intake. Such zones 616 may be positioned in a single vertical well, or result when portions of different wells are located in a common region. The oilfield depicted in Figure 6 includes features of well production such as the drilling and completion of lateral or branch wells that extend from a particular primary wellbore. These lateral or branch wells can be completed such that each lateral well constitutes a separable production zone and can be isolated for selected production. Each well 614 can include a plurality of production zones 616 that are monitored and/or controlled for efficient production and management of the well fluids.

The embodiment of on-site module 102 depicted in Figure 2 includes the DAC unit 266 that interacts with a downhole sensor/control module 250. In the embodiment depicted in Figure 2, the downhole sensor/control module 250 comprises a sensor portion 251 and a driver portion 253. The sensor portion 251 includes flow sensors 252, stress information sensors 257, formation evaluation sensors 254, fishing equipment/operation sensors 255, electro-mechanical positioning sensors 256, and seismic sensors 258. The driver portion 253 comprises electromechanical drivers 260 and electro-mechanical devices 262. The list of components in the sensor portion 251 and the driver portion 253 is intended to be exemplary, and not exhaustive. The downhole sensors, electronics, and electromechanical modules that are associated with each downhole sensor/control module 250 can be placed in different zones in a well. Preferably, each zone 616 of each well 614 includes a distinct downhole sensor/control module 250 dedicated to monitor and control production and operating parameters for that particular zone 616.

Each downhole sensor/control module 250 preferably communicates with a DAC unit 266 located in the on-site computer via a hardwired electrical cable contained within the production tubing. Other embodiments of communications techniques may be used to transfer data between the downhole sensor/control module 250 and the on-site computer 116. These embodiments of communication techniques include wireless transmissions such as low frequency radio transmission from a surface or subsurface location (with corresponding radio transmission feedback from the downhole components to the surface location or subsurface location); acoustic transmission and reception; electromagnetic wave transmission and reception; microwave transmission and reception; fibre optic communications through a fibre optic cable carried by the production tubing from the surface to the downhole components; and electrical signalling from a wire line carried transmitter to the downhole components with subsequent feedback, and the use of fluid lines to provide signals. The communication system 100 may also use various modulation types such as frequencies, amplitudes, codes or variations or combinations of these parameters. Additionally, a transformer or inductive coupled technique may be used in which a transformer primary or secondary coil transforms signals to a downhole tool may be used by the communication system 100. Either the primary or secondary of the transformer is conveyed on a wire line with the other half of the transformer residing within the downhole tool. When the two portions of the transformer are mated, data and electrical power can be interchanged.

The DAC unit 266 preferably interfaces with all of the zones/wells of a well platform or location. As such, it polls each sensor 252, 254, 255, 256, 257, or 258 within sensor portion 251. In general, the DAC unit 266 allows the operator to control the position, seal status, and/or fluid flow in each zone of the well by sending a command to the electromechanical drivers 260 and the electro-mechanical devices 262 in each downhole sensor/control module 250. An important function of the on-site computer 116 is thereby to monitor, control and optimise the fluid or gas flow from the formation into the wellbore and from the wellbore to the surface.

To optimise the production of hydrocarbon-containing fluids from each zone 616, well 614, or the entire oilfield, DAC unit 266 can access one or more remote server computers using the Internet, satellite transceivers and communications systems, or other networking technologies and systems as shown in the embodiment of FIGURE 1. This Internet access allows the input of critical geological data, data gathered during the exploratory drilling operation, 3D seismic, economic data such as hydrocarbon product prices, mapping and topological data for the geographical area of the field, climate data, operating parameter data on downhole system components, etc. This data can be fed to an optimisation software package that can be included in the DAC unit 266.

Control software packages, such as the Vertex 1000 software, are available from Vertex Petroleum Systems of Englewood, Colorado, or the CS Lift software available from Case Services Inc., of Houston, Texas are optimisation software packages that can be used by the DAC unit 266. Such optimisation software packages can include mathematical models of a single zone 616, multiple zones, a complete well 614, or even an entire oilfield. The DAC units 266 can then perform flow predictions for zone 616, well 614, or the entire field flow. Changes in downhole flow parameters in zone 616, well 614, or an entire field can then be modelled as a function of time and their effects on ultimate hydrocarbon production amount. The DAC unit 266 can thereby optimise hydrocarbon production to any desired set of parameters via the on-site computer.

The optimisation software of the DAC unit 266 also may be utilised to automatically monitor and control the activities in the wellbore by monitoring data collected from the sensor portion 251. This optimisation software can respond to changes in the well/zone field conditions by changing the downhole mechanics according to the programmed response optimised for a particular set of operating conditions. The DAC unit 266 provides commands to downhole tools such as packers, sliding sleeves or valves to open, close, change state or perform whatever other action is appropriate if certain sensed parameters are outside the normal or pre-selected. An operator can override the operating parameters by entering an external or surface command from the DAC unit 266.

The on-site 116 computer can be used to process, store and display the information acquired from downhole, and also to interface with an operator or on-site person 114. The on-site computer 116 can be used to compare the status of different wells, compare past and present operating conditions, and to get formation evaluation logs. The DAC unit 266 preferably comprises analogue and digital inputs and outputs, computer bus interfaces, high voltage interfaces and signal processing electronics as is well known in the art.

The DAC unit 266 interfaces with the downhole sensor modules to acquire data from the wellbore, to control the status of the downhole devices, and to control the fluid flow from the well or from the formation. A depth measurement system (not shown) preferably interfaces with the DAC unit 266 and also provide information related to the depth of the tools as the tool string is lowered into the borehole. The DAC unit 266 also includes one or more surface sensors for monitoring well parameters such as pressure, rig pumps, and heave. All of these sensors provide the operator with additional information on the status of the well.

The DAC unit 266 preferably controls the activities of the downhole control modules by requesting sensor measurement data on a periodic basis, and then commanding the downhole modules. Such downhole modules act by opening or closing electromechanical devices such as seals or valves in response to changes in long term borehole conditions. The DAC unit 266 sends a control signal to a downhole electromechanical control device 262 which then actuates a downhole component such as a sliding sleeve, packer seal or other type of flow or pressure control valve. The present invention can automatically control a downhole component in response to sensed selected downhole parameters. Alternatively, the downhole control module 250 is programmed to respond to other received information. For this alternative, the DAC unit 266 can provide an override command to change the downhole control module's programmed responses.

The DAC unit 266 also acquires and processes data sent from surface sensors and downhole sensors. The DAC unit 266 preferably pre-processes the analogue and digital sensor data and formats it for transfer to the remainder of the on-site computer 116. Included among the data received from the DAC unit 266 is data from flow sensors 252, formation evaluation sensors 254, seismic sensors 258 and electromechanical position sensors 256 that provide information on position, orientation and status of the downhole components and the well. The data received from the formation evaluation sensors 254 is processed for the determination of well reservoir parameters. The data received from flow sensors 252 is evaluated to determine whether the operation of the electromechanical devices 262 should be modified. The data gathered from seismic sensors 258 is also processed to determine, for example, there is sand or debris impingement on the casing/tubing annulus. The automatic control executed by the DAC unit 266 can be initiated without the need for any control from the surface or from any other external source. Thus the DAC unit 266 can, if desired, provide a closed loop system for well, zone or field optimisation. While the DAC unit 266 is shown integrated within the on-site computer 116, it is envisioned that a DAC unit 266 may also be contained within the data input 215 of the communications attachment 215. Alternatively, raw data is transmitted form the downhole sensor/control module 250 to the data input 215 of the communication attachment 110. The raw data is then transmitted from the transmitter 216 to the on-site computer 116, and the raw data is acquired and processed into processed data or information by the combination of the DAC unit 266 and the CPU 230 of the on-site computer 116 using known computer techniques. The processed data is then transmitted from the on-site computer 116 via the communication system 100 to the remote computers 109a to 109c.

The downhole sensors associated with flow 252 and formation evaluations sensors 254 may include (but are not limited to) sensors for pressure, flow, temperature, oil/water content, geological formation parameters (such as porosity or density), gamma ray detectors and formation evaluation sensors (which utilise acoustic, nuclear, resistivity and electromagnetic technology). Typically the pressure, flow, temperature and fluid/gas content sensors will be used to monitor the production of hydrocarbons while the formation evaluation sensors 254 will measure, among other things, the movement of hydrocarbons and water in the formation. Additionally, sensors specifically designed to be used in retrieving strings of tubular or tools that have because stuck in a wellbore can be utilised as hereinafter described. As such, sensors related to those activities can include logging tools, ultrasound cameras and hydrophones for determining the location and condition of downhole devices. The DAC unit 266 executes automatic commands for actuating electromechanical drivers 260 or other electronic control apparatus. In turn, the electromechanical driver 260 will actuate an electromechanical device 262 that controls a downhole tool such as a sliding sleeve, shut off device, valve, variable choke, smart shunt screen, smart screen chokes, penetrator valve, perforator valve, or gas lift tool (all of which are known in the art). The DAC unit 266 may also control other electronic control apparatus such as apparatus that may effect flow characteristics of the fluids in the well.

The downhole sensor system includes a power source (not shown) for operation of the system. Power source can be generated in the borehole, at the surface, or by energy storage devices such as batteries. Power is used to provide electrical voltage and current to the electronics and electromechanical devices connected to a particular sensor in the borehole. Power for the power source may come from the surface through hardwiring or may be provided in the borehole such as by using a turbine generator. Other power sources include chemical reactions, flow control, thermal, borehole electrical potential differential, solids production or hydraulic power methods.

The DAC unit 266 controls the electromechanical systems, monitors formation and flow parameters, processes data acquired in the borehole, and transmits and receives commands and data to and from the CPU 260. The DAC can be an integral part of on-site computer 116, or a separate system that interfaces with the on-site computer 116. Though the DAC unit 266 has been described as interacting with elements utilised in the oil industry, the concepts and structure can be modified to apply to control virtually any process or machine.

The communications attachment 110 can be used in combination with the downhole sensor/control module 250 to transmit information or data derived by the latter to a remote location. For example, a person located on-site can direct the video/audio camera 210 at an output meter from one of the flow sensors 252, fishing equipment/operation sensors 255, stress information sensors 257, electromechanical devices 262, or another component such as those indicated within the downhole sensor/control module 250. The output from the sensors or equipment is then transmitted via the data input 215 of the communications attachment 110 over the communication system 100 to one of the off-site service computers 109a to 109c.

Alternatively, the communications attachment 110 can obtain data directly from the sensors or other components of the downhole sensor/control module 250. For instance, the user input device 212 of the communications attachment can be configured to receive data during oil exploration, drilling, pumping, troubleshooting, or other oil related or industrial operations. As such, the data input 215 from the communications attachment 110 is configured to receive input directly from, e.g., the flow sensors 252, the electromechanical devices 262, or an alternate component of the downhole sensor/control module. Such data may include operational level sensor data, video information, fluid level, positional data relating to location of equipment within the wellbore or on-site location, etc. An electric cable or wireless link may be connected to transmit the data obtained from the component of the downhole sensor/control module 250 to the data input 215, including a DAC, of the communications attachment. Alternatively, the data from the downhole sensor/control module 250 can be transmitted over the on-site computer 116, using the DAC 266, to the communications attachment 110. As such, the communications attachment can be used to transmit data generated by the downhole sensor/control module either by reading data generated by the downhole sensor/control module 250 over the operational gauges that exist at the on-site location, or by transmitting the data directly from the sensors via the communications attachment 110 and the communication system 100.

### Communications Attachment Configuration

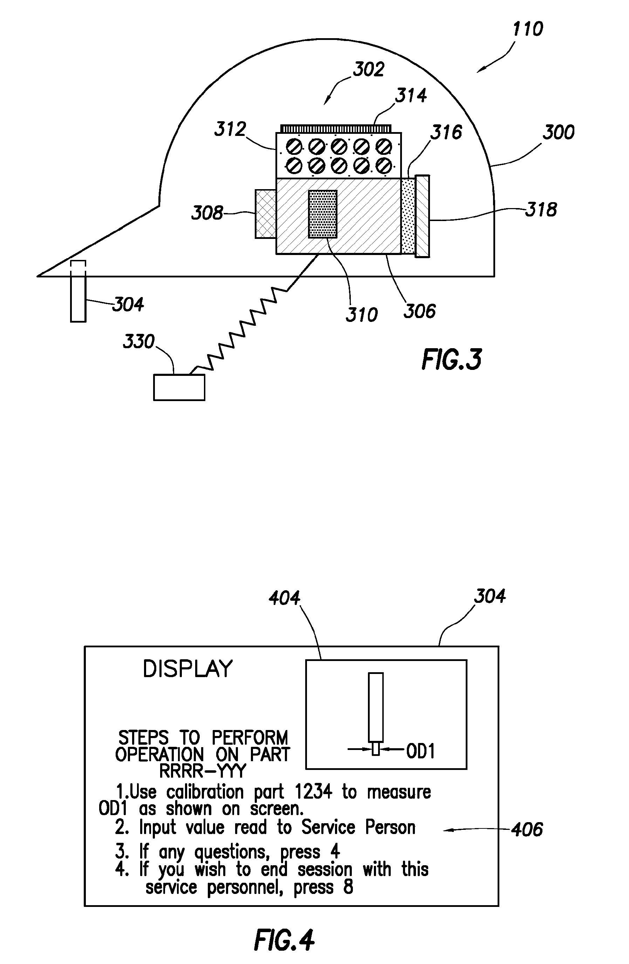

Figure 3 shows one embodiment of communications attachment 110 that is attached to an outer (usually side) surface of a hardhat 300. The communications attachment 110 comprises a sidemount attachment portion 302, a display portion 304, and an audio insert 222. The audio insert is positioned within the hardhat 300 in a position that the wearer can hear the audio output. The display 304 may be a liquid crystal display (LCD), a light emitting diode (LED), a heads up display of the type used in many modern aircraft, or any of a variety of applicable displays that are known. The display 304 may be "flipped up" to remove the display from obstructing the view of the on-site person when the display is not being used. The components of the communications attachment 110 are shown .

The side-mount attachment 302 comprises an audio/video camera portion 306 (including a camera eye 308 and a speaker 310), a pushbutton portion 312, a barcode reader 314, a local link transceiver 316, a GPS receiver 318, and a parameter measuring device 330. The local link transceiver 316 is electrically connected to the other components of the sidemount attachment 302 such that information generated by these components can be transmitted over local link 118. Similarly, the information received over the local link 118 can be received by the appropriate individual components. The audio/video camera may use any known type of video including digital or analogue video, and/or still image transfer. Any type of camera that projects an image (moving or still) is intended to be within the scope of the term "video". The camera eye 308 receives the video input for the audio/video camera portion 306. The speaker 310 receives the audio input for the audio/video camera portion 306.

The embodiment of hardhat 300 shown in Figure 3 is the type of hardhat worn on a site such as a drilling rig, an off-shore oil platform, power generation site, chemical plant or other suitable location. The hardhat electronics would need to be intrinsically safe and is preferably battery powered. The hardhat 300 itself must conform to all hardhat safety standards. The attachment of the communications attachment 110 to the hardhat 300 cannot compromise the structural qualities of the hardhat 300, or make the hardhat impossible, unwieldy, or uncomfortable to wear. Additionally, the communications attachment cannot make the hard hat excessively bulky or heavy. The display 304 cannot be positioned in the hard hat 300 in a manner that limits normal vision required for the on-site wearer of the hardhat.

In one embodiment, the communications attachment 110 is secured to the hardhat by some permanent attachment such as epoxy, another adhesive, or some fastener. In this configuration, the video camera tracks the direction of the head of the on-site person. In an alternate embodiment, a removable clip, fastener, adhesive, or fabric such as VELCRO™ (VELCO is a registered trademark of Velcro Industries B.V. LIMITED LIABILITY COMPANY NETHERLANDS) connects the communications attachment to the hardhat. The on-site person can therefore remove the communications attachment from the hardhat and position the communications attachment at some difficult-to-reach or awkward location. An off-site service person can direct the on-site person about the desired positioning of the communications attachment, if necessary. A hardwire connection or a wireless link may connect the hardhat to the communications attachment to provide for such removal of the communications attachment.

Though the communications attachment is attached to a hardhat 300 in the embodiment shown in Figure 3, it is envisioned that certain embodiments of the communications attachment 110 may be used in environments where the use of hardhats is unnecessary. Therefore, the communications attachment 110 may be attached to the on-site person by, for example, a strap-on headband or other suitable harness. Examples of such professions where the use of hard hats is not required, but the use of the communications attachment may be desirable include plumbers, electricians, explorers, etc.

The video/still image display 304 and the audio speaker 222 display the video received from either the off-site module 108, the remote module 104, or the on-site computer 116. A front exemplary view of one embodiment of the display is illustrated in Figure 4 that comprises prompt screen portion 404 of the video/still image display 304 and a user input prompt and instruction display portion 406. Light sensor and light may be applied to the video/still image display to provide an enhanced video image. The video/still image portion may show a video image of the service person, an assembly drawing, a picture of a part that is being described, a video of an installation procedure, a training session, or whatever information is desired to provide to the on-site person 114 to perform the task at hand. The user input prompt and instruction display portion 406 provides text or data relating to the on-site person. Examples of the user input prompt and instruction display portion include a checklist of operations to perform, request for logon procedure, options for the on-site person to select, and instructions from an off-site person. An example of a logon procedure includes prompts for a user to input a personal identification code. Audio instructions to the on-site person 114 to be used during the user input prompt or other communications can also be provided by the audio speakers 222.

The pushbutton portion 312 of the side-mount attachment allows the on-site person 114 to select a variety of choices from the display. The pushbutton portion may be configured in whichever format is desired. For example, an alphanumeric pushbutton input may be provided, even though the size of the sidemount attachment may limit the number and size of buttons. The user may also enter a password into the pushbutton portion when he starts using the hardhat 300 to identify the user of the hardhat, and to provide correct billing and positional information.

One scenario envisions that the hardhat 110 could be rented, so a number of users may use the same hardhat. Not only can the hardhat with the communications attachment be rented, but access to the professional or technical expertise associated with the off-site service computers can also be considered as being rented. As such, individual passwords may also indicate the user of the hardhat for connection, options, or billing purposes. The pushbutton portion 312 also can be used to select the appropriate off-site service computer 109a, 109b, or 109c. The selection of a particular off-site service computer may relate to the area of expertise of the service personnel who are at each of the off-site service computers. For example, a construction specialist may be located at off-site service computer 109a, an engineer may be located at off-site service computer 109b, and a piping specialist may be located at the off-site service computer 109c. The on-site person 114 can select which of the specialists to communicate by selecting a prescribed code in the pushbutton portion 312.

The barcode reader 314 is any of the known variety of barcode readers, and is used to input information to the communications attachment 110. For a particular on-site person to sign on, he may have a unique barcode strip to slide across the barcode reader. The barcode reader 314 may thus be used to input similar information as the pushbutton portion 312, described above. Additionally, the on-site person 114 may have a distinct barcode strip to select a particular user. For example, the user may swipe a unique barcode strip to connect to an engineer who is located at off-site service computer 109b. The barcode reader 314 thereby forwards this information to select the particular service person or consultant.

The barcode reader 314 can also be used to assemble a relatively complex structure. For example, in the oil industry, the on-site person 114 may be installing a series of drill pipes for the oil drilling. The user can swipe the barcode reader across a unique barcode affixed to each length of pipe being inserted for the drilling process. The lengths of the drill pipes can therefore be monitored and/or recorded by the on-site computer 116. This information can then be forwarded to the remote module 104 and/or the off-site module 108. This automatic recording of drill pipe lengths limits the possibility errors in the total length of drill pipe or other tubulars that are inserted in the well. Tubulars can be provided with bar codes located thereupon having any number of data types. Additionally, the tubulars could be provided with tags known generally as RFID tags that permit quick scanning while permitting personnel to remain a safe distance of the tubulars being scanned. The use of the bar code reader 314 can be highly desirable for the accurate performance of other mundane or repetitive tasks. While the bar code reader 314 is shown as being attached to the hardhat 300, it can also be a temporarily removable hand-held item that provides for greater accessibility in some application. Any type of optical, electromagnetic, or other reader that can be used to detect the identity of a part, product, person, etc. can be used in place of, or in addition to, the barcode reader.

The parameter measuring device 330 may use laser, ultrasound, or other known measuring, diagnostic, or calibration technique. The parameter measuring device can precisely measure tools, equipment, or parts with which the on-site person is interacting. It may be important for the on-site person to calibrate certain critical dimensions on-site before it is used. For example, in the drilling technologies, it is vital to ensure that the dimensions (e.g. diameter) of the drill rod connections are correct before the drill rod length is inserted in the drill hole. Also, a parameter measuring device 330 that is distinct from the communications attachment 110 may be used by the on-site person 114, and its output "read" by the video/still image/audio camera 306. Alternatively, the value indicated by the parameter measuring device 330 may be manually input into pushbutton portion 312 by the communications attachment 110.

The local link transceiver 316 is configured to transmit data over a wireless link between the communications attachment 110 and the on-site computer 116. The local link transceiver may utilise any type of wireless communication link that is used to transmit data between local sites, but preferably is a radio frequency (RF) transceiver that directs an omni-directional beam that is not blocked by obstructions. Using a signal that is not blocked is important since the on-site user is likely to be positioned at different locations on such equipment as a drilling rig, an off-sea platform, a large piece of machinery, etc. The local link transceiver 316 comprises an antenna (not shown) that transmits a signal to, and receives a signal from, a similar antenna located at the on-site computer 116 in a manner that provides the local link 118.

The remote module 104 communicates with the off-site module 108 over the communication network 106 as shown in expanded detail in Figure 7. The Internet is selected as the preferred communications network since many sites are located at remote sites that can be most easily accessed by the Internet. The expense of providing a distinct broadband communications network between the off-site module 108 and the remote module 104 would be prohibitive for most remote locations.

The GPS receiver 318 is provided to indicate the position of the on-site person 114 based upon the location of the helmet 200. GPS receivers are well known and used to provide positional information in such applications as aircraft, missiles, hikers, etc. The cost of GPS receivers has recently decreased to make them commercially viable for a wide variety of users. The positional data provided by the GPS receiver 318 can be transmitted over the local link 118 to the on-site computer 116 (or over communication system 100 to the remote module 104 or the off-site service computer 108) to the respective database. The GPS positional values stored in the database for a specific worksite can be compared with those for a plurality of work sites, and the location of the on-site person 114 can be the off-site modules 108. The billing or technical data can be directed at the remote module 104 or the off-site module 108 automatically based upon the positional GPS information received from the on-site person 114. Additionally, such positional information may be used to locate a lost or injured on-site person.

### Computer Operations

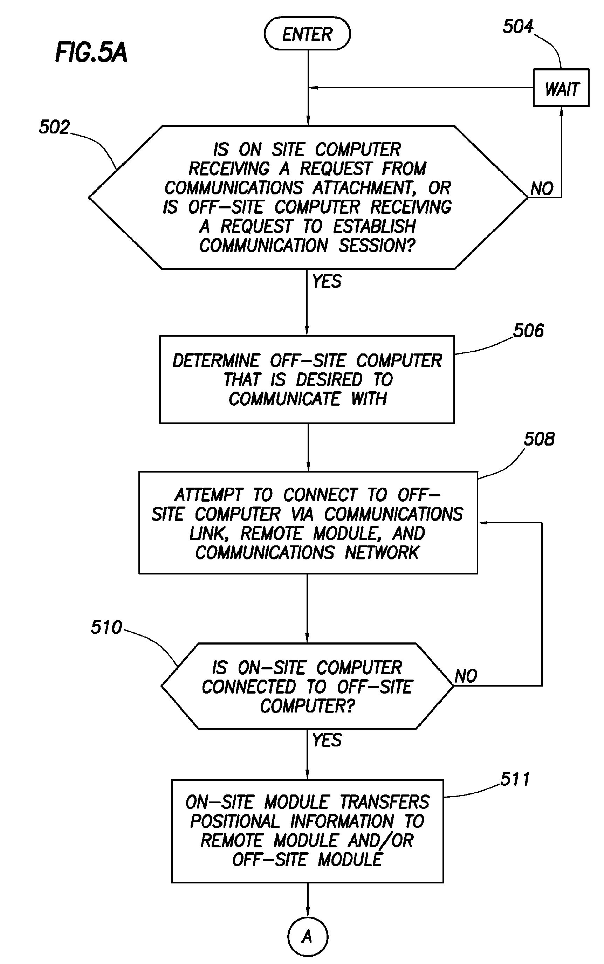

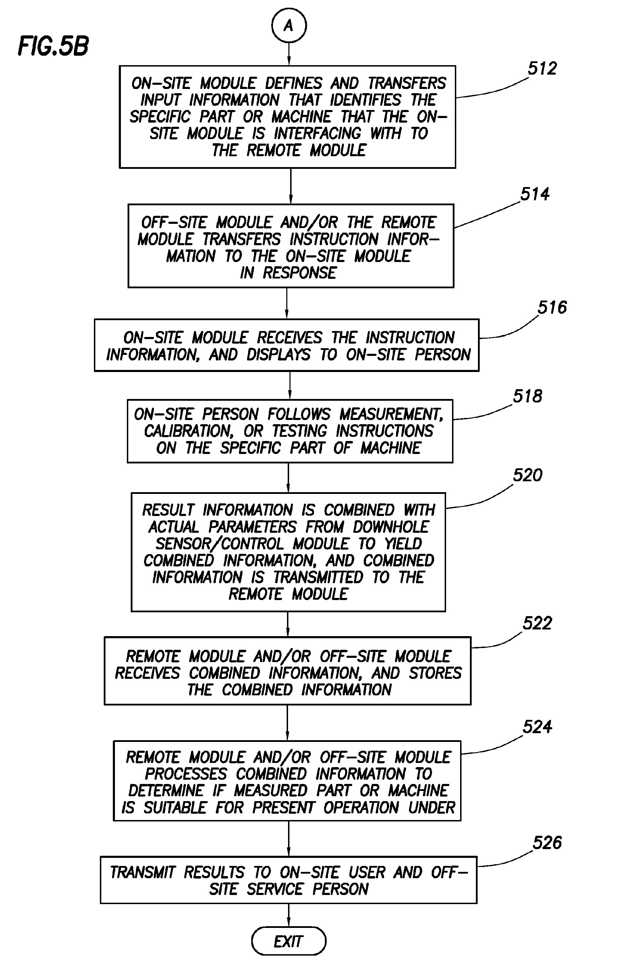

Figure 5 (including Figs. 5A and 5B) illustrate one embodiment of an exemplary method that may be performed by the communication system 100 of Figure 1. A considerable amount of the information may be stored in, or retrieved from, databases 737, 747 (see Figure 7), or 239 (see Figure 2). The method 500 starts with decision block 502 in which the on-site computer 116 determines whether there is a request to establish a communication session with an off-site service person located at a specific off-site service computer 109a, 109b, or 109c. Alternatively, the off-site service computers could establish the connection to an on-site person 114 at the on-site module 116. If the answer to decision block 502 is NO, then the method 500 continues to block 504, and loops back through decision block 502 until a person positioned at either the on-site module 102, the remote module 104, or the off-site module 108 wishes to establish a communication session.

If the answer to decision block 502 is YES, then the method 500 continues to block 506 in which the on-site computer 116 determines with which off-site service computer 109a, 109b, or 109c communications should be established (each off-site service computer is associated with a different service person). The addresses of the desired service person may be stored in either the database 239 of the on-site computer 116 or the database 747 of the remote module 104. Following block 506, the method continues to block 508.

In block 508, the communication system 100 attempts to establish a connection between the on-site computer 116 and the off-site service computers 109a, 109b, and 109c. Typical network connection protocols (such as ATM, Frame Relay, CDMA, FDMA, TDMA, etc.) are used to establish the connection. Method 500 then continues to decision block 510 in which the on-site computer 116 determines whether the connection has been established. If the answer to decision block 510 is NO, then the method 500 loops through block 508 and decision block 510. If the answer to decision block 510 is YES, then the method 500 continues to block 511.

In block 511, either the communications attachment 110 or the on-site computer 116 or the on-site module 102 contains a receiver that receives positional (e.g., GPS) information. The GPS information indicates the physical position of the GPS receiver. The GPS information is transmitted over the connection between the on-site computer 116 and the desired off-site service computer 109a, 109b, or 109c to identify the location of the on-site person. This positional information can be used for the purposes of supplying technical data, billing, rental of equipment from a rental centre to certain work sites, locating lost or injured persons, etc. In this disclosure, the rental centre is a location where the job is dispatched or the location where persons with expertise or information based upon expertise resides. Following block 511, method 500 continues to block 512.

In block 512, the on-site module 102 comprises the communications attachment 110 and the on-site computer 116. The on-site module derives and transfers input information that pertains to the specific part or machine that is involved to the remote module 104 and/or the off-site module 108. This information may include input information from the barcode reader 314, input to the pushbutton portion 312, viewing a unique part or machine with the video portion 306, or some other manner known in the art to identify the part or machine. The input information is transferred over the communications link 120 to the remote module 104. The remote module 104 receives the input information. Either the remote module 104 or one of the off-site service computers 109a, 109b, or 109c locates the appropriate the instruction information respectively in databases 747 or 737 (see Figure 7). The instruction information may include such items as a schematic drawing of the part or machine, critical dimensions of the part or machine, checklists of, or video clips showing, how to utilise or operate the part or machine, or any other information that may be of use to the on-site person in using the part or machine.

Some of the instructional information can also be provided by the service person located at the off-site service computer 109a, 109b, or 109c. For example, the service person may either provide verbal instructions, or may select which one of a plurality of instructions stored as files in the databases 737 or 747 should be provided to the on-site person 114. The service person then forwards the above information (plus information that may be added automatically by the computer based upon the question or query) to the communications attachment 110. If the remote module 104 stores the instruction information corresponding to the input information, then the instruction information is retrieved and returned it to the on-site computer 106 (over communications link 120) in block 514. If one of the off-site service computers 109a, 109b, or 109c stores the instruction information corresponding to the input information, then the remote module 104 transfers the input information from the desired off-site service computer 109a, 109b, or 109c to the on-site computer 106 via remote module. The remote module 104 transmits the instruction information over the communication link 120 to the on-site computer 116.

When the on-site computer receives the instruction information in block 516, the instruction information is forwarded over the local link 118 to the communications attachment 110. The instruction information received by the communications attachment is of the type that can be read by the video/ still image display 304, the audio speaker 222, or the user input prompt and instruction display 224 as described above. An example of the information may be instructions for the on-site person to measure a desired measurement of the casing in an oil drill. A schematic diagram of the casing may be provided over the video/still image display 304, as well as an identifying characteristic of the part used to measure the casing, and an indication of the allowable ranges of allowable measurements or test results. A verbal description of the instructions may be recited over audio speakers 222. A video record of a similar prior operation may be included. Other values, instructions, calibration measurements, weights, shapes, etc. could also be stored in the databases in the remote module 104 or the off-site service computers 109a, 109b, or 109c, could be transferred to the on-site module 102 upon demand. Following block 516, the method 500 continues to block 518.

In block 518, the on-site person follows the operation indicated by the instruction information received by the communications attachment 110. If the communications attachment indicates to make a casing measurement using a particular tool, then the on-site person performs this operation. In this manner, the communications system provides a set of interactive multimedia instructions that demonstrate how to perform a specific operation on a specific part or machine. The results of the specific measurement, calibration, or other operation to be performed by the on-site person as a response to the instruction information is referred to as "result information".

Following block 518, the method continues to optional block 520 in which the result information derived in block 518 is combined with actual measurements from the downhole sensor/control module 250 and is processed by the DAC unit 266. The DAC unit 266 provides an output in data format that may be used by the remote module 104 or the off-site service computers 109a, 109b, or 109c to determine whether the specific measured or calibrated part is applicable for the present operation based upon specific conditions. The combined information is transmitted over the communications link 120 to the remote module 104, and possibly (if the off-site service computers 109a, 109b, or 109c instead of the remote module 104.

The method 500 continues to block 524 in which the remote module and/or the off-site computer 129a, 129b, or 129c receives and processes the combined information to determine if the part or machine is suitable for operation under measured condition. Block 524 is performed using computer programs associated with the specific operation. For example, a computer program may input the measured dimensions of a casing in an oil drill to determine if the casing is structurally adequate or sufficiently contoured considering the present condition of the drill string, as determined by the DAC unit 266 of the on-site computer. The results from the processing of the combined information in block 524 are returned to the on-site person 114, as well to the off-site service computers 109a. 109b, or 109c where the service personnel are located.

### Operation of the Communication System

Certain operational aspects of the communication system 100 are now detailed. The communication system 100 can be worn by an on-site person 114 and one or more service persons located at computers 109a, 109b, or 109c located at the off-site module 108. The communication system can also be used with downhole sensing devices that operate in conjunction with the communications attachment to provide data to an off-site location and thereby permit monitoring and direction of activities at an on-site location. The local link 118 that transmits data between the on-site person and an on-site computer 116 is wireless (preferably a RF link), and thereby does not impede free movement of the on-site person 114. Using present integrated circuit or solid state technologies, the communications attachment may be light (e.g. less than a pound) such that the hard hat 300 that the communications attachment is secured to is comfortable to wear.

The use of the GPS receiver 318 provides an accurate position information of the on-site person 114 who is wearing the hardhat 300. The positional information is useful for automatic reporting of status, usage, location and other technically useful data. For example, if an off-site person is working where there are multiple sites in a close vicinity, then the positional information can automatically determine his specific site, and indicate the activities performed at that worksite or platform.

Much of the equipment used in downhole drilling is very large and extremely complex. Often workers, even those skilled in the specific area, become confused based upon the variety of components such as parts, equipment, tools, etc. For example, many components used in downhole drilling, such as drill pipe, appear similar after long periods of operation in a hostile environment. As such, any positional information that provides an indication of the identity of a specific part or tool may be useful in proper identification thereof.

The oil industry has a variety of functions associated with exploring for oil, maintaining the oil drilling and pumping equipment, and repairing damaged oil drilling and pumping equipment that can benefit from the interactive communication of the invention. One such example is the assembly of tubular strings for insertion into a wellbore. Each length of casing or other tubular includes a male joint fitting and a female joint fitting that permit joining of adjacent pieces of tubular to form the string. To add a new piece of tubular to the drill string, either the male joint fitting or the female joint fitting in the new piece is positioned in threaded contact with the mating joint fitting of the adjacent piece of tubular. The new tubular is then rotated until the mating joint fittings are threaded together to an acceptable torque. The rotation between adjacent pieces of tubular is typically applied by a hydraulically driven tong. The torque applied to the joints is determined by standards that ensure the tubular pieces will remain fixed together during well operations. Typically, the tongs are electrically connected to sensors that determine the amount of torque present in the joint and the value is fed back to an on-site computer that can determine when the appropriate amount of torque in the joint has been established. Because the tubulars with their male and female portions are manufactured according to the same standards, the number of angular turns needed to establish an acceptable torque in the joint should be almost the same for each subsequent joint.

According to the present invention, an site computer, 116, can be used to establish, display, and/or retransmit data associated with the number of turns of a tubular and the amount of torque associated with a joint at any one time. Allowable torque versus turns curves are stored in the on-site computer 116, the remote module 104, or the off-site service computer 109a, 109b, or 109c. The allowable torque versus turns curves plot acceptable ranges of torque versus the number of turns for a drill length joint are plotted for different types of drill lengths. The actual torque versus turns curves can be compared to the allowable torque versus turns curves to determine the quality and acceptability of the joint between tubulars. The joint may be considered unacceptable if during the tightening for example, the amount of torque generated for than number of turns falls outside of the acceptable limits of the allowable torque versus turns curve.

If the actual torque versus turn curves fall considerably far outside of allowable limits indicated by the allowable torque versus turn curves, then the on-site operator may determine that the piece of tubular is unacceptable and it can be taken out of service without consultation with service personnel. If the actual torque versus turn curves produced for a specific joint are marginally outside the value of the allowable torque versus turn curves, then the on-site person may wish to consult with off-site service personnel using the communication system 100. Alternatively, the communication system 100 allows for off-site service personnel to monitor and/or provide input for the tightening of joints in the drill length and provide input to determine whether the tightening of the drill length falls outside of the acceptable limits based upon actual torque versus turns curves produced by sensors associated with the tongs.

Another service function associated with the oil industry that can benefit from the methods and apparatus of the invention is "fishing". Fishing is part of troubleshooting a well and can be required at virtually any time during the drilling, completion or operation of an oil well. The fishing operation utilises data or information received from the fishing equipment/operation sensors 255 of the downhole sensor/control module 250. For example, during drilling, a wellbore can collapse and bury a portion of the drill string in place. Applying a rotational force to the unburied portion of the drill string when a portion of the drill string is buried can result in twisting and damaging the unburied portion of the drill string. By using the fishing equipment and methods and the received data and information from the fishing equipment, the damaged drill string can be removed without damaging other equipment or parts of the well.

Fishing equipment may include electronic sensors that are configured to detect problems and conditions downhole. The fishing equipment is often connected to a wire, pipe, or flexible tubing, and is initially used in the wellbore to determine the location of a problem, like a buried, damaged, or obstructed string of tubular. For example, if the bottom of the drill string contacts an obstruction at a certain depth, the electronic information from the fishing tool provides an indication of the type and location of the obstruction. Once the location of the problem is determined, a solution can be carried out. Upon determination that the drill string is buried, damaged, or obstructed, there are often multiple possible alternatives to remedy the problem. For example, if a drill string is buried at a specific depth, it may be possible to un-thread the drill pipe at a depth near where the drill string is buried and divert the drill string to drill a new wellbore, thereby abandoning the buried drill lengths of the drill string. It may alternatively be desired to drill around the buried drill string. Multiple such alternatives are often presented to fishing personnel for their consideration and solution. The communication system 100 of the invention allows for the on-site persons to consult with one or more remotely located service persons or experts (such as fishers) very quickly without the need for the service persons to travel to the wellsite. The service persons can obtain sufficient information from the communication system 100 to provide an informed opinion of how to deal with the drill string being damaged, buried, or obstructed. Based upon this information a skilled operator can analyse the data during the "fishing" expedition and determine how to proceed. The description of the fishing operation and equipment is intended to be exemplary and not exhaustive. The oil drilling operation in particular and industrial operations in general, are replete with examples of on-site/off-site examples that could utilise the communications attachment 110 as described.

The various operations related to oil wells and drilling require skilled service personnel to monitor the operations at the on-site location. Using the above communication system 100, the skilled operator can be located at one of the remote computers 109a, 109b, or 109c. The communication system 100 allows an off-site service personnel to interact with on-site persons and the on-site location to monitor the performance of the operation. Additionally, the off-site service personnel can receive sufficient information to be sure that the equipment is performing properly and/or repairs are being done correctly.

The parameter measuring device 330 can provide precise measuring or calibration of tools, equipment, or parts with which the on-site person is interacting. An example of a drill part that requires precise dimensioning is a full gauge window mill that has a very tight clearance with the inner diameter of the pipe in which the mill is being run. For example, in a 7" casing pipe, there may be less than 1/8" of clearance between either side of the casing and the mill. In practice, the casing is exposed to hard wear and may be bent, twisted, or otherwise deformed such that it is not perfectly round as it is inserted down the hole which also decreases the clearance. With small diameter casings, an even smaller diameter mill may be required. Often such tools as mills having uncommon diameters are shipped from remote warehouse locations and a trained technician is required to provide input on the operation of the tools. Using the communication system 100, the input can come from specialists located at the off-site computers 109a, 109b, and 109c.

A standard procedure may be to run a gauge ring on that mill to check to ensure that it is in dimensional conformance (similar tests may be run for other tools, parts, machines, etc.). The communication system 100 will prompt the on-site person 114 to check the required dimensions using the parameter measuring device 330 to ensure proper operation. The barcode reader 314 may be used to identify the part, as described below, and then the computer retrieves the special measurements, procedures, and characteristics associated with that part, tool, or machine from the applicable data bases.

The bar code reader enables tool bar codes to be recorded prior to their use. For example, a unique bar code strip (or other similar identification element) could be located on each of the different parts and components as stored in the database. The databases (e.g. 239, 737, 747) located throughout the communication system 100 can retrieve a suggested checklist for the specific activity to be performed related to each part or component. Additionally, drawings or video can be provided on the video display 304 to provide an indication of how to perform the activity. Other information such as a simple schematic of the part or tool with prompting of critical dimensions/features to be checked can be stored in the databases, and retrieved upon reading of the bar code.

Depending on operations being performed, different predetermined views of relevant information could be broadcast to the on-site person 114. For example, custom displays would be devised for operations relative to drilling, liner running, cementing, fishing, logging, well testing, perforating, fracturing, etc. operations used in the oil industry, or other activities, to which the communication system is being applied.

The communication system 100 provides a technique to perform service delivery utilising the Internet. This technique of providing service delivery from remote locations via the Internet enables effective and precise collaboration between the on-site personnel and the off-site service personnel and specialists. If a person with specific skills or experience is required, the on-site person, could access those skills of the service person without the expense and time required for transportation of the service personnel to the site.

Another aspect of the communication system 100 is that it provides a semi-permanent record of the activities performed by an on-site person, and which can be used for case history collection. When accidents or errors occur, the actions of each individual can be reviewed. Additionally, the activities of a skilled person can be recorded to indicate how the activity "should be performed" for training purposes. Less skilled on-site persons can view the recording as a means to improve their performance.

The communication system 100 uses the Internet, or other known network, to provide timely interaction with service personnel. The service person has experience, and also access to all kinds of information. Additionally, service persons with different skills are relatively simple to access for multi-disciplinary information.

A large drilling or service company would normally require a large staff of experienced service personnel. Using the communication system, however, these service personnel could become more centralised and effectively used because they would spend less time travelling or waiting to perform their duties at a wellsite. The companies could therefore better utilise service personnel and avoid some expenses related to extended travel time and the associated transportation expenses. If a specific platform or work site needs expertise for a brief period, the company could interact with the service personnel over the Internet, and provide extremely detailed information and an accurate image of what is occurring on-site. If a platform or work site has a malfunction or failure, assistance from a suitable service person can be provided immediately.

The hardhat 300 could also be provided as a rental item from a company such as a rental centre that also rents the services of personnel. Service personnel typically bill out at a day rate and tools rent out at an hourly or day rate. Instead of sending both the tools and the service persons to the worksite, the use of the communication system 100 allows sending only the tools out. An on-site person can rent a hardhat 112 having a communications attachment 110, and obtain the experience of the service personnel without the necessity of having the off-site service personnel transported to the site. The on-site persons could then use the tools as instructed by the service personnel. Data related to use of the hardhat and communication systems can be stored and/or permanently transmitted back to the rental centre for accounting and billing purposes.

## Claims

1. A method for remotely controlling and/or monitoring at least one parameter of well bore equipment at an oil or gas well, comprising:
collecting data corresponding to the at least one parameter by a sensor module monitoring the at least one parameter of the well bore equipment;
transmitting the collected data to a remote control/monitoring unit via a communication link;
analysing the collected data to determine if the parameter is within predefined limits;
if the parameter is not within predefined limits, then transmitting control data from the remote control/monitoring unit to the well bore equipment for modifying the operation of the well operation equipment so that the parameter will conform to the predefined limits or stopping operation of the wellbore equipment.

2. A method as claimed in claim 1, wherein the well bore equipment is oil field tubular handling equipment.

3. A method as claimed in claim 1 or 2, further comprising storing the collected data in a storage means of the remote control/monitoring unit.

4. A method as claimed in claim 1, 2 or 3, wherein the communication link is wireless.

5. A method as claimed in claim 1, 2 or 3, wherein the communication link is a bus transmission means or fiber optic link.

6. A method as claimed in any preceding claim, wherein the data is transmitted from sensor modules at multiple locations to the remote control/monitoring unit.

7. A method as claimed in claim 6, wherein the data is stored from all sensor modules to provide a complete make-up history of all well bore equipment.

8. A method as claimed in any preceding claim, wherein the remote control/monitoring unit is located on-site relative to the well bore equipment.

9. A method as claimed in any of claims 1 to 7, wherein the remote control/monitoring unit is located off-site relative to the well bore equipment.

10. A method as claimed in any preceding claim, wherein said sensor module is adapted to collect data referring to at least torque and number of rotations for monitoring joint make-up in particular for tubing and case connection.

11. A method as claimed in any preceding claim, wherein:
the wellbore equipment comprises an individual control system for operating the wellbore equipment, and
if the parameter is not within predefined limits, then the step of transmitting control data from the control/monitoring unit to the well bore equipment for modifying the operation of the well operation equipment so that the parameter will conform to the predefined limits or stopping operation of the wellbore equipment comprises:
if the parameter is not within predefined limits, then transmitting control data from the remote control/monitoring unit to the individual control system for modifying the operation of the well operation equipment so that the parameter will conform to the predefined limits or stopping operation of the wellbore equipment.

12. A rig control and monitoring system comprising:
at least one piece of mechanized well bore equipment, comprising a sensor module; and
a remote control/monitoring unit connected with the well bore equipment by a communication link, wherein the control/monitoring unit comprises a display means and/or a storage means.

13. A system as claimed in claim 12, wherein the mechanized well bore equipment is tubing or casing tongs, drill pipe tongs, remote operated tongs, tong position systems, make-up and break out tools, systems for automatic tubular handling and running, connection leak detecting systems, slips, spiders, pressure control equipment, or packers.

14. A system as claimed in claim 12 or 13, wherein the sensor module is a torque sensor module, turn counter sensor module, pressure sensor module, temperature sensor module or flow sensor module.

15. A system as claimed in claim 12, 13 or 14, wherein the remote control /monitoring unit is located off-site relative to the well bore equipment.

16. A system as claimed in claim 12, 13 or 14, wherein the remote control /monitoring unit is located on-site relative to the well bore equipment.

17. A system as claimed in any of claims 12 to 16, wherein the remote control /monitoring unit is a computer.

18. A system as claimed in any of claims 12 to 17, wherein sensor modules from multiple locations are connected to the remote control/monitoring unit.

19. A system as claimed in any of claims 12 to 18, wherein the communication link is a high data rate communication link.

20. A system as claimed in any of claims 12 to 19, wherein the communication link is a radio transmission link, fibre optic communication link, or bus link.

21. A system as claimed in claim 20, wherein the bus link is ethernet, field bus, RS232, or RS485.

22. A system as claimed in claim 21, wherein the connection over ethernet is a TCP/IP connection.

23. A system as claimed in any of claims 12 to 22, wherein the remote control/monitoring unit comprises a torque - turn and torque - time monitoring means.

24. A system as claimed in any of claims 12 to 23, wherein the communication link is fully duplexed.

25. A system as claimed in any of claims 12 to 24, wherein the remote control/monitoring unit further comprises a programmable logic control device.

26. A system as claimed in any of claims 12 to 25, wherein the remote control /monitoring unit comprises at least one evaluation module to evaluate the received data and to display same as a graph, table, or bar.

27. A system as claimed in any of claims 12 to 26, further comprising a local control/monitoring unit connected to the well bore equipment with a second communication link.

28. A system as claimed in any of claims 12 to 27, wherein the well bore equipment further comprises an individual control system for operating the well bore equipment and the communication link connects the remote control/monitoring unit with the individual control system.
